# EUROPÄISCHE PATENTSCHRIFT

(11) **EP 4 045 224 B1**
(45) Veröffentlichungstag und Bekanntmachung des Hinweises auf die Patenterteilung: **01.01.2025**
(21) Anmeldenummer: 20803068.4
(22) Anmeldetag: 16.10.2020
(51) Int. Cl.: B23K 101/36, B23K 103/10, B23K 103/12, B23K 103/00, H01M 4/134, H01M 4/1395, B23K 26/354, B23K 26/352, B23K 26/38, B23K 26/40

(54) **VERFAHREN ZUM BEARBEITEN EINER LITHIUMFOLIE ODER EINER MIT LITHIUM BESCHICHTETEN METALLFOLIE MITTELS EINES LASERSTRAHLS**
METHOD FOR TREATING A LITHIUM FOIL OR A METAL FOIL COATED BY MEANS OF A LASER BEAM
PROCÉDÉ D'USINAGE D'UNE FEUILLE DE LITHIUM OU D'UNE FEUILLE MÉTALLIQUE REVÊTUE DE LITHIUM AU MOYEN D'UN FAISCEAU LASER

(30) Priorität: 18.10.2019 DE 102019216070
(43) Veröffentlichungstag der Anmeldung: 24.08.2022
(73) Patentinhaber: TRUMPF Laser- und Systemtechnik SE, 71254 Ditzingen (DE)
(72) Erfinder: BOCKSROCKER, Oliver, 74343 Sachsenheim (DE)
(74) Vertreter: Trumpf Patentabteilung
(86) Internationale Anmeldenummer: PCT/EP2020/079276
(87) Internationale Veröffentlichungsnummer: WO 2021/074424

(56) Entgegenhaltungen:
- WO-A1-2008/134053
- DE-A1- 102016 121 462
- US-A1- 2018 316 020

## Beschreibung

Die Erfindung betrifft ein Verfahren zum Bearbeiten einer Lithium aufweisenden Folie mittels eines Laserstrahls.

Für die Herstellung von Festkörperbatterien werden reine Lithium-Folien oder mit Lithium beschichtete Kupfer- oder Aluminiumfolien als Elektrodenfolien, insbesondere als Anode, eingesetzt. Dabei werden die Folien mittels eines Laserstrahls mit einer NIR-Wellenlänge im Bereich von 1000 bis 1100 nm, insbesondere 1030 nm, bearbeitet, z.B. zugeschnitten, geschweißt, gebohrt, abgetragen oder oberflächenstrukturiert. Durch diese Laserbearbeitung ergeben sich negative Einflüsse aufgrund einer großflächigen Wärmeeinflusszone und aufgrund von Schmelz-und Partikelanhaftung an oder nahe der Bearbeitungszone der Folie. Durch die Wärmeeinflusszone kann vermehrt Lithiumhydroxyd durch die Reaktion mit Wasser aus der Umgebungsluft entstehen. Partikel und Schmelzanhaftung können zur Zerstörung der Folie führen.

Die Bearbeitung von Lithium enthaltenden Batterie- oder Akku-Komponenten, mittels Laserstrahlung ist beispielsweise aus der US 2018/0316020 A1, der DE 10 2016 121 462 A1 oder der WO 2008/134053 A1 bekannt.

Die vorliegende Erfindung stellt sich die Aufgabe, bei einem Verfahren der eingangs genannten Art die geschilderten Nachteile zu reduzieren bzw. ganz zu vermeiden.

Diese Aufgabe wird erfindungsgemäß dadurch gelöst, dass der Laserstrahl eine weiter unten spezifizierte Wellenlänge aufweist. In den spezifizierten Wellenlängenbereichen ist der Absorptionsgrad von Lithium sowohl für s- als auch für p-polarisiertes Licht ca. 3- bis 10-mal größer als der Absorptionsgrad für die bisher meist verwendete NIR-Wellenlänge von 1030 nm. Durch die erfindungsgemäß höhere Absorption können bei gleicher Laserleistung und -intensität höhere Produktionsvorschübe erzielt werden. Dies hat eine verringerte Wärmeeinflusszone zur Folge, wodurch weniger Lithiumhydroxid entsteht. Zudem werden aufgrund der höheren Absorption weniger Schmelz- und Partikelanhaftungen an der Schnittkante erzeugt, was einen geringeren Ausschuss zur Folge hat.

Als Folie wird eine reine Lithiumfolie oder eine mit Lithium beschichtete Metallfolie, insbesondere Kupfer- oder Aluminiumfolie, verwendet. Solche Folien werden bevorzugt als Elektrode, insbesondere Anode, bei der Herstellung von Festkörperbatterien eingesetzt.

In einer ersten Erfindungsvariante liegt die Wellenlänge des Laserstrahls im grünen Bereich zwischen 500 nm und 550 nm, insbesondere bei ca. 515 nm. In diesem Wellenlängenbereich ist die Absorption bei senkrechtem Lichteinfall im Vergleich zu NIR-Laserlicht (1030 nm) um einen Faktor von bis zu ca. 2,8 größer. Die grünen Wellenlängen können problemlos beispielsweise mit einem Scheibenlaser erzeugt werden.

In einer zweiten Erfindungsvariante liegt die Wellenlänge des Laserstrahls im blauen Bereich zwischen 440 nm und 460 nm, insbesondere bei ca. 450 nm, oder im violetten Bereich zwischen 400 nm und 410 nm, insbesondere bei ca. 405 nm. In diesen Wellenlängenbereichen ist die Absorption bei senkrechtem Lichteinfall im Vergleich zu NIR-Laserlicht (1030 nm) um einen Faktor von bis zu ca. 4,7 größer. Die blauen bzw. violetten Wellenlängen können problemlos beispielsweise mit einem Diodenlaser erzeugt werden.

In einer dritten Erfindungsvariante liegt die Wellenlänge des Laserstrahls im UV-Bereich zwischen 250 nm und 370 nm, insbesondere bei ca. 257 nm, bei ca. 355 nm oder bei ca. 342 nm. In diesem Wellenlängenbereich ist die Absorption bei senkrechtem Lichteinfall im Vergleich zu NIR-Laserlicht (1030 nm) um einen Faktor von bis zu ca. 10,6 größer. Die UV-Wellenlängen können problemlos beispielsweise mit einem Scheibenlaser erzeugt werden.

Die Lithium aufweisende Folie wird erfindungsgemäß mittels des Laserstrahls entweder geschnitten, geschweißt, oder ausgespart bzw. gebohrt.

Besonders bevorzugt trifft der Laserstrahl unter einem Einfallswinkel zwischen 0° und ca. 45°, bevorzugt zwischen 0° und 30° auf die Oberfläche der Folie auf.

Weitere Vorteile und vorteilhafte Ausgestaltungen des Gegenstands der Erfindung ergeben sich aus der Beschreibung, den Ansprüchen und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigen:
- Fign. 1a, 1b: schematisch die Bearbeitung einer reinen Lithiumfolie (Fig. 1a) und einer mit Lithium beschichteten Folie (Fig. 1b) mittels eines Laserstrahls;
- Fig. 2: den Absorptionsgrad von Lithium-Metall in Abhängigkeit vom Einfallswinkel für Wellenlängen im NIR-, grünen, blauen und UV-Bereich; und
- Fign. 3a-3e: schematisch verschiedene Abwendungsbeispiele der Bearbeitung einer Lithium aufweisenden Folie.

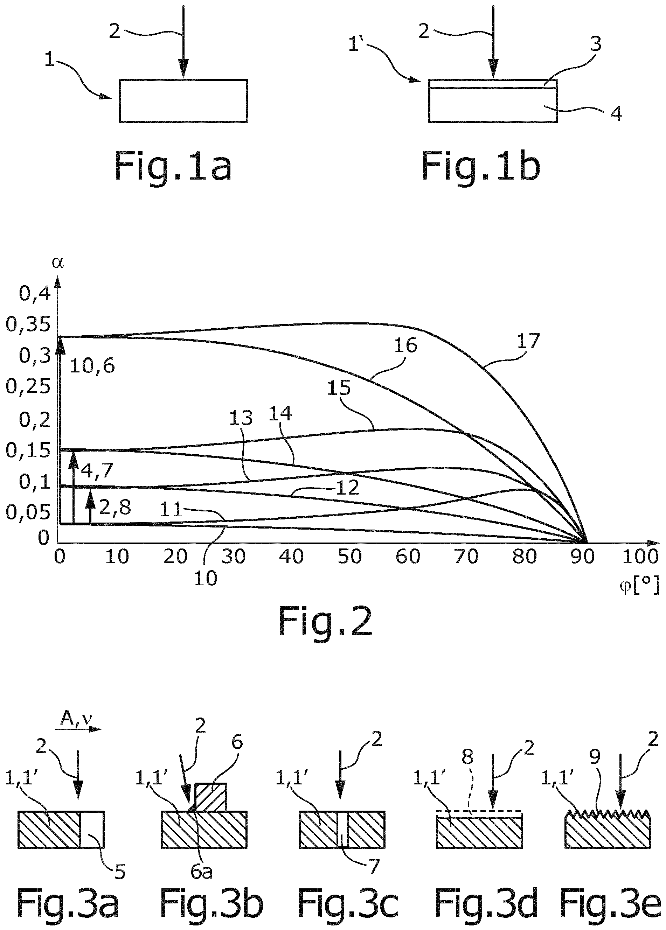

Das erfindungsgemäße Verfahren dient zum Bearbeiten einer Lithium aufweisenden Folie **1** mittels eines Laserstrahls **2,** d.h., die Folie 1 besteht zumindest teilweise aus Lithium. Wie in **Fig. 1a** gezeigt, kann die Folie 1 beispielsweise eine reine Lithiumfolie oder, wie in **Fig. 1b** gezeigt, eine mit Lithium **3** beschichtete Metallfolie **4,** z.B. eine mit Lithium 3 beschichtete Aluminium- oder Kupferfolie, sein. Bevorzugt weist die Folie 1,1' eine Dicke von 10 µm bis 400 µm, vorteilhaft von ca. 20 µm, auf. Die Bearbeitung der Folie 1, 1' erfolgt insbesondere mit dem Ziel, die Folie 1, 1' als Elektrode, insbesondere Anode, einer Festkörperbatterie zu verwenden.

Die Laserbearbeitung solcher Folien 1, 1' erfolgt bisher mittels Laserstrahlung im NIR-Bereich mit Wellenlängen von 1000-1100 nm, insbesondere mit einer Wellenlänge von 1030 nm. Durch diese Laserbearbeitung ergeben sich allerdings negative Einflüsse aufgrund einer großflächigen Wärmeeinflusszone sowie aufgrund von Schmelz- und Partikelanhaftungen an oder nahe der Bearbeitungszone. In der Wärmeeinflusszone kann vermehrt Lithiumhydroxyd durch die Reaktion mit Wasser aus der Umgebungsluft entstehen, und Partikel und Schmelzanhaftungen können zur Zerstörung der Folie 1, 1' führen.

**Fig. 2** zeigt Absorptionskurven (Fresnel) von Lithium-Metall in Abhängigkeit vom Einfallswinkel für Wellenlängen im NIR-, grünen, blauen und UV-Bereich bei einer Temperatur des Lithium-Metalls von 298 °K. Aufgetragen ist - jeweils für eine NIR-, eine grüne, eine blaue und eine UV-Wellenlänge - der Absorptionsgrad α über dem Einfallswinkel **ϕ** für die s-polarisierte und die p-polarisierte Komponente des einfallenden Lichts, wobei die s-polarisierte Komponente linear senkrecht zur Einfallsebene und die p-polarisierte Komponente linear parallel zur Einfallsebene polarisiert sind.

Die Absorptionskurven **10, 11** zeigen den Absorptionsgrad der s- und p-polarisierten Komponenten von heute verwendetem NIR-Laserlicht mit einer Wellenlänge von 1030 nm. Die bei senkrechtem Lichteinfall (ϕ=0°) erreichten Absorptionsgrade liegen bei ca. 0,03 und lassen bei der Folienbearbeitung nur geringe Vorschubgeschwindigkeiten ("Vorschübe") zu, um so die für die Bearbeitung erforderliche Energie in die Folie 1, 1` einzubringen.

Die Absorptionskurven **12, 13** zeigen den Absorptionsgrad der s- und p-polarisierten Komponenten von grünem Laserlicht mit einer Wellenlänge von 515 nm. Zu erkennen ist, dass bei senkrechtem Lichteinfall (ϕ=0°) der Absorptionsgrad von grünem Laserlicht bei ca. 0,09 liegt und damit im Vergleich zum NIR-Laserlicht (Absorptionskurven 10, 11) um ca. den Faktor 2,8 größer ist.

Die Absorptionskurven **14, 15** zeigen den Absorptionsgrad der s- und p-polarisierten Komponenten von blauem Laserlicht mit einer Wellenlänge von 450 nm. Zu erkennen ist, dass bei senkrechtem Lichteinfall (ϕ=0°) der Absorptionsgrad von blauem bzw. violettem Laserlicht bei ca. 0,15 liegt und damit im Vergleich zum NIR-Laserlicht (Absorptionskurven 10, 11) um ca. den Faktor 4,7 größer ist.

Die Absorptionskurven **16, 17** zeigen schließlich den Absorptionsgrad der s- und p-polarisierten Komponenten von ultraviolettem Laserlicht mit einer Wellenlänge von 342 nm. Zu erkennen ist, dass bei senkrechtem Lichteinfall (ϕ=0°) der Absorptionsgrad von ultraviolettem Laserlicht bei ca. 0,33 liegt und damit im Vergleich zum NIR-Laserlicht um ca. den Faktor 10,6 größer ist.

Statt wie bisher mittels eines Laserstrahls im NIR-Bereich erfolgt erfindungsgemäß die Laserbearbeitung der Folien 1, 1' mittels eines Laserstrahls 2 im grünen Bereich zwischen 500 nm und 550 nm, insbesondere bei ca. 515 nm, im blauen Bereich zwischen 440 nm und 460 nm, insbesondere bei ca. 450 nm, im violetten Bereich zwischen 400 nm und 410 nm, insbesondere bei ca. 405 nm, oder im UV-Bereich zwischen 250 nm und 370 nm, insbesondere bei ca. 257 nm, bei ca. 355 nm oder bei ca. 342 nm. Für alle diese Wellenlängenbereiche ist der Absorptionsgrad im Vergleich zu NIR-Laserlicht um ca. den Faktor 2,8 bis 10,6 erhöht, wodurch bei gleicher Laserleistung und -intensität höhere Produktionsvorschübe erzielt werden. Dies hat eine verringerte Wärmeeinflusszone zur Folge, wodurch weniger Lithiumhydroxyd entsteht. Zudem werden aufgrund der höheren Absorption weniger Schmelz-und Partikelanhaftungen an der Schnittkante erzeugt, was einen geringeren Ausschuss zur Folge hat.

Als Laserstrahl 2 können ein cw-Laserstrahl oder ein gepulster Laserstrahl eingesetzt werden. Wie Versuche gezeigt haben, sollte die eingesetzte Laserleistung dabei zwischen 100 W und 4000 W, insbesondere ca. 1000 W, und der Spotdurchmesser des Laserstrahls 2 auf der Folie 1, 1' zwischen 50 µm und 600 µm, insbesondere ca. 85 µm, betragen. Im Falle eines gepulsten Laserstrahls 2 können die Pulsdauern zwischen 0,2 ms bis 50 ms betragen. Im Zuge der Bearbeitung wird der Laserstrahl 2 über die Folie 1, 1' hinwegbewegt, wobei die hierbei erzielbaren Vorschübe im Bereich von 50 bis 5000 mm/s liegen können. Zur Bearbeitung kann eine Scanneroptik und zur Positionierung ein kamerabasiertes Sensorsystem eingesetzt verwendet werden.

**Fign. 3a-3e** zeigen verschiedene Abwendungsbeispiele der Bearbeitung einer Lithium aufweisenden Folie 1, 1` mittels eines Laserstrahls 2 mit grünen, blauen, violetten und UV-Wellenlängen.

In **Fig. 3a** wird die Folie 1, 1' mittels des grünen, blauen, violetten oder UV-Laserstrahls 2 geschnitten, um einen für die Herstellung von Festkörperbatterien geeigneten Folienzuschnitt zu erzeugen. Hierbei wird der Laserstrahl 2 in Vorschubrichtung A mit der Vorschub- bzw. Schneidgeschwindigkeit v über die Folie 1, 1' bewegt, um einen Schnitt **5** zu erzeugen. Durch die hohe Absorption des grünen, blauen, violetten oder UV-Laserstrahls 2 wird mehr Material verdampft als mit einem herkömmlichen NIR-Laserstrahl (1030 nm), und die Schmelzanhaftung wird verringert.

In **Fig. 3b** ist ein metallischer Stromableiter **6** mittels des grünen, blauen, violetten oder UV-Laserstrahls 2 an die Folie 1, 1' elektrisch leitend angeschweißt. Die Schweißnaht ist mit **6a** bezeichnet. Für den Fall, dass die Folie 1, 1' in einer Festkörperbatterie die Anode ausbildet, dient der Stromableiter 6 zum Ableiten des Stromes nach außen. Die Stromableiter 6 bestehen in der Regel aus einem anderen Metall als die Anode der Festkörperbatterie.

**Fig. 3c** zeigt ein mittels des grünen, blauen, violetten oder UV-Laserstrahls 2 in die Folie 1, 1' gebohrtes Loch bzw. Aussparung **7.** Solche Löcher 7 in der Folie 1, 1' können bei der Herstellung von Festkörperbatterien dazu dienen, mehrere Lagen von Folien 1, 1' mechanisch miteinander zu verbinden.

Bei der in **Fig. 3d** gezeigten Folie 1, 1' wurden mittels des grünen, blauen, violetten oder UV-Laserstrahls 2 eine oder mehrere Schichten **8** ihrer Oberfläche abgetragen. Im Fall der Folie 1', also einer mit Lithium 3 beschichteten Metallfolie 4, kann so beispielsweise die gesamte Lithiumbeschichtung in einem gewünschten Bereich gezielt abgetragen (entschichtet) werden (nicht Gegenstand der Erfindung).

**Fig. 3e** zeigt die Folie 1, 1' mit strukturierter Oberfläche **9,** wobei die Oberflächenstruktur durch Bestrahlen der Folienoberfläche mit dem grünen, blauen, violetten oder UV-Laserstrahl 2 erzeugt wurde (nicht Gegenstand der Erfindung).

## Patentansprüche

1. Verfahren zum Schneiden einer Lithium aufweisenden Folie (1; 1') mittels eines Laserstrahls (2), wobei die Folie (1; 1') eine Lithiumfolie oder eine mit Lithium (3) beschichtete Metallfolie (4), insbesondere Kupfer- oder Aluminiumfolie, ist,
**dadurch gekennzeichnet,**
**dass** der Laserstrahl (2) eine Wellenlänge im grünen Bereich zwischen 500 nm und 550 nm, insbesondere von 515 nm, oder im blauen Bereich zwischen 440 nm und 460 nm, insbesondere von 450 nm, oder im violetten Bereich zwischen 400 nm und 410 nm, insbesondere von 405 nm oder im UV Bereich zwischen 250 nm und 370 nm, insbesondere von 257 nm, von 355 nm oder von 342 nm, aufweist.

2. Verfahren zum Schweißen einer Lithium aufweisenden Folie (1; 1') mittels eines Laserstrahls (2), wobei die Folie (1; 1') eine Lithiumfolie oder eine mit Lithium (3) beschichtete Metallfolie (4), insbesondere Kupfer- oder Aluminiumfolie, ist,
**dadurch gekennzeichnet,**
**dass** der Laserstrahl (2) eine Wellenlänge im grünen Bereich zwischen 500 nm und 550 nm, insbesondere von 515 nm, oder im blauen Bereich zwischen 440 nm und 460 nm, insbesondere von 450 nm, oder im violetten Bereich zwischen 400 nm und 410 nm, insbesondere von 405 nm oder im UV Bereich zwischen 250 nm und 370 nm, insbesondere von 257 nm, von 355 nm oder von 342 nm, aufweist.

3. Verfahren zum Bohren eines Lochs (7) oder einer Aussparung in eine Lithium aufweisende Folie (1; 1') mittels eines Laserstrahls (2), wobei die Folie (1; 1') eine Lithiumfolie oder eine mit Lithium (3) beschichtete Metallfolie (4), insbesondere Kupfer- oder Aluminiumfolie, ist,
**dadurch gekennzeichnet,**
**dass** der Laserstrahl (2) eine Wellenlänge im grünen Bereich zwischen 500 nm und 550 nm, insbesondere von 515 nm, oder im blauen Bereich zwischen 440 nm und 460 nm, insbesondere von 450 nm, oder im violetten Bereich zwischen 400 nm und 410 nm, insbesondere von 405 nm oder im UV Bereich zwischen 250 nm und 370 nm, insbesondere von 257 nm, von 355 nm oder von 342 nm, aufweist.

4. Verfahren nach Anspruch 1, 2 oder 3,
**dadurch gekennzeichnet, dass** der Laserstrahl (2) unter einem Einfallswinkel zwischen 0° und ca. 45°, bevorzugt zwischen 0° und 30° auf die Oberfläche der Folie (1; 1') auftrifft.

## Claims

1. A method for cutting a film (1; 1') comprising lithium by means of a laser beam (2), wherein the film (1; 1') is a lithium film or a metal film (4) coated with lithium (3), in particular a copper or aluminum film,
**characterized in that**,
the laser beam (2) has a wavelength in the green range between 500 nm and 550 nm, in particular of 515 nm, or in the blue range between 440 nm and 460 nm, in particular of 450 nm, or in the violet range between 400 nm and 410 nm, in particular of 405 nm, or in the UV range between 250 nm and 370 nm, in particular of 257 nm, of 355 nm or of 342 nm.

2. A method for welding a film (1; 1') comprising lithium by means of a laser beam (2), wherein the film (1; 1') is a lithium film or a metal film (4) coated with lithium (3), in particular a copper or aluminum film,
**characterized in that**,
the laser beam (2) has a wavelength in the green range between 500 nm and 550 nm, in particular of 515 nm, or in the blue range between 440 nm and 460 nm, in particular of 450 nm, or in the violet range between 400 nm and 410 nm, in particular of 405 nm, or in the UV range between 250 nm and 370 nm, in particular of 257 nm, of 355 nm or of 342 nm.

3. A method for drilling a hole (7) or a cut-out, by means of a laser beam (2), in a film (1; 1') comprising lithium, wherein the film (1; 1') is a lithium film or a metal film (4) coated with lithium (3), in particular a copper or aluminum film,
**characterized in that**,
the laser beam (2) has a wavelength in the green range between 500 nm and 550 nm, in particular of 515 nm, or in the blue range between 440 nm and 460 nm, in particular of 450 nm, or in the violet range between 400 nm and 410 nm, in particular of 405 nm, or in the UV range between 250 nm and 370 nm, in particular of 257 nm, of 355 nm or of 342 nm.

4. The method according to claim 1, 2 or 3, **characterized in that** the laser beam (2) impinges on the surface of the film (1; 1') at an angle of incidence of between 0° and approximately 45°, preferably between 0° and 30°.

## Revendications

1. Procédé de découpe d'une feuille (1 ; 1') contenant du lithium au moyen d'un faisceau laser (2), dans lequel la feuille (1 ; 1') est une feuille de lithium ou une feuille métallique (4) revêtue de lithium (3), en particulier une feuille de cuivre ou d'aluminium, **caractérisé en ce que**,
le faisceau laser (2) présente une longueur d'onde dans la plage du vert, entre 500 nm et 550 nm, en particulier de 515 nm, ou dans la plage du bleu, entre 440 nm et 460 nm, en particulier de 450 nm, ou dans la plage du violet, entre 400 nm et 410 nm, en particulier de 405 nm, ou dans la plage UV, entre 250 nm et 370 nm, en particulier de 257 nm, 355 nm ou 342 nm.

2. Procédé de soudage d'une feuille (1 ; 1') contenant du lithium au moyen d'un faisceau laser (2), dans lequel la feuille (1 ; 1') est une feuille de lithium ou une feuille métallique (4) revêtue de lithium (3), en particulier une feuille de cuivre ou d'aluminium, **caractérisé en ce que**,
le faisceau laser (2) présente une longueur d'onde dans la plage du vert, entre 500 nm et 550 nm, en particulier de 515 nm, ou dans la plage du bleu, entre 440 nm et 460 nm, en particulier de 450 nm, ou dans la plage du violet, entre 400 nm et 410 nm, en particulier de 405 nm, ou dans la plage UV, entre 250 nm et 370 nm, en particulier de 257 nm, 355 nm ou 342 nm.

3. Procédé de perçage d'un trou (7) ou d'une cavité dans une feuille (1 ; 1') contenant du lithium au moyen d'un faisceau laser (2), dans lequel la feuille (1 ; 1') est une feuille de lithium ou une feuille métallique (4) revêtue de lithium (3), en particulier une feuille de cuivre ou d'aluminium,
**caractérisé en ce que**,
le faisceau laser (2) présente une longueur d'onde dans la plage du vert, entre 500 nm et 550 nm, en particulier de 515 nm, ou dans la plage du bleu, entre 440 nm et 460 nm, en particulier de 450 nm, ou dans la plage du violet, entre 400 nm et 410 nm, en particulier de 405 nm, ou dans la plage UV, entre 250 nm et 370 nm, en particulier de 257 nm, 355 nm ou 342 nm.

4. Procédé selon la revendication 1, 2 ou 3, **caractérisé en ce que** le faisceau laser (2) frappe la surface de la feuille (1 ; 1') avec un angle d'incidence compris entre 0 ° et environ 45 °, de préférence entre 0 ° et 30 °.
